# EUROPÄISCHE PATENTSCHRIFT

(11) **EP 3 985 266 B1**
(45) Veröffentlichungstag und Bekanntmachung des Hinweises auf die Patenterteilung: **29.11.2023**
(21) Anmeldenummer: 21202987.0
(22) Anmeldetag: 15.10.2021
(51) Int. Cl.: F16B 41/00, F16B 21/02, F16B 21/07

(54) **DECKEL MIT VERSCHLUSS**
LID WITH CLOSURE
COUVERCLE POURVU DE FERMETURE

(30) Priorität: 16.10.2020 DE 202020105933 U
(43) Veröffentlichungstag der Anmeldung: 20.04.2022
(73) Patentinhaber: Samson Aktiengesellschaft, 60314 Frankfurt (DE)
(72) Erfinder: HABERMANN, Frank, 61130 Nidderau (DE)
(74) Vertreter: Puschmann Borchert Kaiser Klettner Patentanwälte Partnerschaft mbB

(56) Entgegenhaltungen:
- EP-A1- 0 403 322
- EP-A1- 1 396 647
- EP-A1- 2 177 774
- DE-B3-102011 110 124
- ES-T3- 2 344 368

## Beschreibung

Die Erfindung betrifft einen Deckel mit einem Verschluss, umfassend einen Drehstift und einen Drehstiftträger, gemäß der im Oberbegriff des Patentanspruches 1 angegebenen Art. Ferner betrifft die Erfindung ein Gehäuse, das einen vorbeschriebenen Deckel umfasst, gemäß dem Oberbegriff des Patentanspruches 13.

Eine der einfachsten und günstigsten Arten der Verbindung von zwei Bauteilen ist die mit Stiften, Bolzen oder ähnlichen Formteilen. Ein in einem Deckel gelagerter Drehstift kann beispielsweise zur Verbindung des Deckels mit einem Gehäuse dienen. Zur Aufnahme von Axialkräften ist der Drehstift häufig durch ein Sicherungselement, z.B. ein Splint, ein Querstift usw., gegen Verschieben, Verdrehen oder Verlust gesichert.

In der Ventiltechnik sind mit Bajonettverschlüssen ausgeführte Deckel für Aktuatoren bekannt. So beschreibt die EP 2 875 266 B1 ein Ventil umfassend einen Ventilkörper, der über eine Drehverbindung mit einer Ventiloberteilbaugruppe verbunden ist. Der Ventilkörper weist einen Rand oder eine Oberfläche mit mindestens zwei abgesetzten Stiften auf, die auf gegenüberliegenden Seiten des Ventilkörpers angeordnet sind. Die Ventiloberteilbaugruppe weist einen entsprechenden Rand oder eine entsprechende Oberfläche mit mindestens zwei Keilnuten auf, die auf gegenüberliegenden Seiten der Ventiloberteilbaugruppe angeordnet sind. Jede Keilnut ist ausgespart und derart konfiguriert, dass sie einen entsprechenden abgesetzten Stift aufnimmt und in diesen eingreift, wenn die Ventiloberteilbaugruppe in Bezug auf den Ventilkörper gedreht wird.

Die CH 403 003 A beschreibt einen Schnellverschluss zwischen einem Deckel und einem Gehäuse für elektrische Apparate. Das Gehäuse weist ein Verschlussstück auf, das als eine Gewindehülse mit Bajonettschlitzen ausgebildet ist, wobei die Gewindehülse in ein Gegengewinde des Gehäuses eingeschraubt ist. Im Deckel ist ein federnd aufgehängter, schwenkbarer Bolzen angeordnet, der an einem in das Verschlussstück einzuführenden Ende zwei Querstifte aufweist. Beim Verschließen des Deckels mit dem Gehäuse wird der Bolzen bei gleichzeitiger Ausführung einer kleinen Drehung in das Verschlussstück gedrückt, so dass die Querstifte in die Bajonettschlitze eingreifen. Die Bewegung des Bolzens ist durch einen Begrenzungsrand der Gewindehülse axial begrenzt. Beim Öffnen des Deckels federt der Bolzen in seine Ausgangstellung zurück, wobei eine Sicherungsscheibe das Zurückfedern des Bolzens axial begrenzt und den Verlust des Bolzens verhindert.

Die EP 1 396 647 A1 zeigt einen Deckel nach dem Stand der Technik.

Die DE 10 2005 026 745 A1 offenbart eine Drehklipsverbindung, insbesondere in oder an einem Kraftfahrzeug, mit einem Drehklipsträger und einem Drehklips, der in eine Einsetzöffnung des Drehklipsträgers bis in eine Einsetzstellung einsteckbar und von der Einsetzstellung in eine Funktionsstellung um eine Drehachse drehbar ausgebildet ist. In der Einsetzstellung ist der Drehklips durch eine Sicherungseinrichtung gesichert, die das Herausfallen des Drehklipses aus der Einsetzöffnung verhindert. Der Drehklips weist am einsteckseitigen Drehklipsende einen in Bezug auf die Drehachse radial abstehenden, zungenförmigen Drehklipsvorsprung mit einer Dämpfungsauflage auf, die in der Funktionsstellung an dem durch den Drehklips zu sichernden Teil anliegt.

Der Erfindung liegt die Aufgabe zugrunde, einen Deckel mit einem Verschluss der im Oberbegriff des Patentanspruches 1 beschriebenen Art derart weiterzubilden, dass ein im Deckel gelagerter Drehstift mit erhöhtem Schutz gegenüber dem Stand der Technik gegen Verlust gesichert ist.

In bekannter Art und Weise umfasst ein Deckel mit einem Verschluss einen Drehstift, der in eine Einsetzöffnung eines Drehstiftträgers eingesetzt ist. Der Drehstift kann zur Verbindung des Deckels mit einem weiteren Bauteil dienen, das wie vorliegend als ein Gehäuse ausgebildet sein kann, beispielsweise als ein Gehäuse eines elektrischen Antriebs eines Stellventils. Der Drehstiftträger des Deckels kann beispielsweise ein abnehmbares oder ein aufklappbares Teil bilden, das eine Öffnung des Gehäuses verdeckt.

Der Drehstift kann beispielsweise aus einem einteiligen Kunststoffformteil gebildet sein, und er kann insbesondere als ein Spritzgussformteil hergestellt sein. Der Drehstift ist in einer Einsetzrichtung, insbesondere in axialer Richtung des Drehstiftes, in die Einsetzöffnung des Drehstiftträgers bis zu einer Einsetzposition einbringbar. In der Einsetzposition wirkt ein rückfederndes Element einer Sicherungseinrichtung über eine Klemmkraft einer Federvorspannung auf den Drehstift, um ein grundlegendes Herausfallen des Drehstiftes aus dem Drehstiftträger zu verhindern. Die Sicherungseinrichtung nimmt über einen axialen Formschluss geringe axiale Kräfte auf, die entgegen der Einsetzrichtung wirken, und sichert den Drehstift im Drehstiftträger gegen Verlust.

Der Drehstift ist um eine Drehachse drehbar zwischen einer offenen Stellung und einer gesperrten Stellung in der Einsetzöffnung des Drehstiftträgers gelagert. In der offenen Stellung ist der Drehstift in der Einsetzrichtung in die Einsetzöffnung einführbar und entgegen der Einsetzrichtung bzw. in Ausziehrichtung ist er durch Überwinden eines Formschlusses der Sicherungseinrichtung herausnehmbar.

Der Drehstift ist durch Drehen von der offenen Stellung in die gesperrte Stellung bringbar. In der gesperrten Stellung ermöglicht der Drehstift eine Verriegelung des Deckels mit dem Gehäuse. Der Drehstift weist z.B. eine Arretier-Vertiefung auf, die ein Ineinandergreifen des Drehstiftes mit dem Gehäuse ermöglicht, um einen axialen Formschluss zu bilden. Das Ineinandergreifen kann insbesondere ohne Reibverschluss und/oder Vorspannung erfolgen. Der axiale Formschluss der gesperrten Stellung kann im Vergleich zur Sicherungseinrichtung größere in Ausziehrichtung wirkende Axialkräfte aufnehmen. Über den axialen Formschluss zwischen dem Drehstift und dem Gehäuse ist der Drehstift in der gesperrten Stellung in der Einsetzöffnung gegen Verlust gesichert.

Der Drehstift ist auch ohne Zusammenwirkung mit dem Gehäuse von der offenen Stellung in die gesperrte Stellung bringbar. In diesem Fall ist der Drehstift über die Sicherungseinrichtung im Drehstiftträger gegen ein grundsätzliches Herausfallen gesichert. Es ist jedoch schon mit relativ geringen in Ausziehrichtung wirkenden Axialkräften möglich, die Sicherungseinrichtung zu überwinden und den Drehstift entgegen der Einsetzrichtung aus der Einsetzöffnung herauszudrücken. Das kann beispielsweise durch ein Pressen des Deckels auf das Gehäuse erfolgen. Beim Aufsetzen des Deckels auf das Gehäuse kann durch eine Ausrichtung des Drehstiftes in der gesperrten Stellung das Gehäuse eine Axialkraft auf ein Profil des Drehstiftes ausüben, so dass dieser entgegen der Einsetzrichtung aus der Einsetzöffnung gedrückt ist.

Erfindungsgemäß bilden der Drehstift und der Drehstiftträger in der gesperrten Stellung mittels einer Sperr-Vorrichtung einen wirksamen Formschluss, der eine axiale Bewegung des Drehstiftes entgegen der Einsetzrichtung verhindert, und wobei der axiale Formschluss in der offenen Stellung freigegeben ist.

Der Drehstift und die Einsetzöffnung des Drehstiftträgers weisen jeweils derart aufeinander abgestimmte Profile auf, dass der Drehstift nur in der gesperrten Stellung einen Formschluss mit dem Drehstiftträger bildet. In der gesperrten Stellung weisen die jeweiligen Profile des Drehstiftes und des Drehstiftträgers eine gegenseitige Überschneidung auf. Der Formschluss zwischen dem Drehstift und dem Drehstiftträger verhindert eine axiale Bewegung des Drehstiftes entgegen der Einsetzrichtung.

Die jeweiligen Profile des Drehstiftes und des Drehstiftträgers sind derart ausgerichtet, dass der Formschluss nur in einer begrenzten Winkellage gebildet ist, insbesondere in der gesperrten Stellung. In der offenen Stellung des Drehstiftes ist der Formschluss freigegeben. Das bedeutet, dass in einer begrenzten Winkellage, insbesondere in der offenen Stellung des Drehstiftes, die jeweiligen Profile ohne gegenseitige Überschneidung ausgerichtet sind. Dadurch ist in der offenen Stellung des Drehstiftes das Einsetzen des Drehstiftes in die Einsetzöffnung ohne Verhinderung durch das Profil des Drehstiftträgers möglich.

Die Sperr-Vorrichtung ist also erst durch Drehen des Drehstiftes von der offenen Stellung in die gesperrte Stellung wirksam, denn dadurch ist ein axialer Formschluss zwischen dem Drehstift und dem Drehstiftträger bewirkt. Der axiale Formschluss bildet sich immer dann, wenn der Drehstift in der Einsetzposition in die gesperrte Stellung gebracht ist, unabhängig davon, ob der Deckel am Gehäuse anliegt.

Wenn der Drehstift sich bereits in der gesperrten Stellung befindet, bevor der Deckel auf dem Gehäuse angeordnet wird, ist das Profil des Drehstiftes derart ausgerichtet, dass es ein Profil des Gehäuses überschneidet bzw. überlagert. Dadurch ergibt sich ein axialer Formschluss zwischen dem Deckel bzw. Drehstift und dem Gehäuse, insbesondere für den Fall, dass der Deckel in der gesperrten Stellung des Drehstiftes unter Ausübung von Kraft auf das Gehäuse aufgesetzt wird und das Gehäuse entgegen der Einsetzrichtung eine Axialkraft auf den Drehstift ausübt. In der gesperrten Stellung des Drehstiftes bildet die erfindungsgemäße Sperr-Vorrichtung einen axialen Formschluss zwischen dem Drehstift und dem Drehstiftträger, um den Drehstift in der gesperrten Stellung gegen ein Herausdrücken aus dem Drehstiftträger zu sichern.

Bevorzugt ist die Einsetzöffnung des Drehstiftträgers als eine im Wesentlichen zylindrische Ausnehmung mit einem Innendurchmesser ausgebildet, und der Drehstift ist im Wesentlichen zylinderförmig mit einem Außendurchmesser ausgebildet, wobei der Innendurchmesser und der Außendurchmesser nahezu gleich sind. Der Drehstiftträger und der Drehstift weisen jeweils zylindrische Flächen auf, die im Wesentlichen dieselbe Kontur jeweils einmal als Innenform, d.h. als Einsetzöffnung, und einmal als Außenform aufweisen. Die Einsetzöffnung und der Drehstift sind derart aufeinander abgestimmt, dass sie jeweils einen nahezu gleichen Durchmesser aufweisen. Eine Toleranz der Passung zwischen Drehstiftträger und Drehstift ist derart ausgewählt, dass der Drehstift zentriert in der Einsetzöffnung eingesetzt ist und der Drehstift ein geringes Spiel mit guter Beweglichkeit gegenüber dem Drehstiftträger aufweist. Auf diese Weise ist der Drehstift in der Einsatzöffnung drehbar, und der Drehstift und der Drehstiftträger definieren gemeinsam eine Lagerverbindung.

Ferner kann die Einsetzöffnung des Drehstiftträgers mit einer Einführschräge zur Einführung des Drehstiftes ausgebildet sein. Dies ermöglicht eine einfache und schnelle Montage des Drehstiftes im Drehstiftträger, und eine Beschädigungsgefahr des Drehstiftes sowie des Drehstiftträgers ist vermindert.

Vorzugweise weist der Drehstift ein Kopfende sowie ein Einführende auf, wobei das Kopfende mit einem gegenüber der Einsetzöffnung vergrößerten Kopf ausgebildet ist, und wobei das Einführende in Einsetzrichtung in die Einsetzöffnung einführbar ist. Der Drehstift ist über das Einführende insbesondere in axialer Richtung von einer Oberseite des Deckels in die Einsetzöffnung einführbar.

Der gegenüber dem Durchmesser der Einsetzöffnung vergrößerte Kopf des Drehstiftes weist einen äußeren Umfang auf. Dadurch weist das Kopfende des Drehstiftes in der Einsetzposition einen axialen Formschluss mit dem Drehstiftträger auf und ermöglicht ein leichtes axiales Verspannen des Drehstiftes im Drehstiftträger und mit dem Gehäuse.

Stirnseitig kann der Kopf des Drehstiftes eine Ausnehmung aufweisen, die zur Einführung eines Drehwerkzeuges, insbesondere eines Schraubendrehers, dient. Mit dem Drehwerkzeug ist der Drehstift um die Drehachse zwischen der offenen Stellung und der gesperrten Stellung verdrehbar.

Bevorzugt weist der Drehstift im Querschnitt einen ersten Kreissektor von 0° bis 180° sowie einen zweiten Kreissektor von 180° bis 360° auf, wobei der Drehstift im ersten Kreissektor eine Arretier-Vertiefung aufweist, die sich in Umfangsrichtung des Drehstiftes erstreckt und wobei die Arretier-Vertiefung in Richtung Einführende des Drehstiftes von einem Arretier-Absatz begrenzt ist, der in der gesperrten Stellung ein Hintergreifen eines Arretier-Vorsprungs des Gehäuses durch den Drehstift ermöglicht.

Die im ersten Kreissektor des Drehstiftes ausgebildete Arretier-Vertiefung erstreckt sich insbesondere von 0° bis 180° teilkreisförmig in Umfangsrichtung des Drehstiftes.

Die Arretier-Vertiefung kann beispielsweise axial zwischen der Sicherungseinrichtung und dem Einführende angeordnet sein. In Richtung Einführende des Drehstiftes ist die Arretier-Vertiefung durch einen Arretier-Absatz begrenzt, der ein Hintergreifen eines mit dem Deckel zu verbindenden Gehäuses durch den Drehstift in der gesperrten Stellung ermöglicht. Das Hintergreifen des Gehäuses bzw. eines Arretier-Vorsprungs des Gehäuses durch den Drehstift bewirkt eine teilkreisförmige Konturüberschneidung, und es entsteht in der gesperrten Stellung ein axialer Formschluss zwischen dem Drehstift und dem Gehäuse. Das Gehäuse kann gegenüber dem Deckel mit einer Radialdichtung abgedichtet sein, die beim Verschließen des Gehäuses mit dem Deckel durch Axialkräfte zusammengepresst wird. Dadurch drückt das Gehäuse entgegen der Einsetzrichtung auf den Drehstift, der in vorteilhafter Weise durch den axialen Formschluss mit dem Vorsprung des Gehäuses gegen ein Herausdrücken aus dem Drehstiftträger gesichert ist. Auf diese Weise ist eine Lagesicherung des Deckels am Gehäuse gewährleistet.

Um ein Ineinandergreifen des Gehäuses bzw. eines Arretier-Vorsprungs des Gehäuses mit dem Drehstift zu erleichtern, kann der Arretier-Absatz eine führende Kante aufweisen, die mit Abschrägungen bzw. Fasen ausgebildet ist.

Der Arretier-Absatz kann insbesondere zwischen 0° und 90° des ersten Kreissektors ausgebildet sein. In einer bevorzugten Ausführungsform erstreckt er sich beispielsweise von 0° und 90°. Wenn der Deckel an dem zu verschließenden Gehäuse angeordnet ist, ist der Drehstift also in einer begrenzten Winkellage in die Einsetzöffnung bis in die Einsetzposition einführbar ohne Überlagerung des Arretier-Absatzes mit dem Arretier-Vorsprung des Gehäuses. In der begrenzten Winkellage, d.h. in der offenen Stellung des Drehstiftes, ist der Drehstift in die Einsetzöffnung durch Vorbeiführen des Arretier-Absatzes an dem Arretier-Vorsprung des Gehäuses einsetzbar.

Bevorzugt weist der Arretier-Absatz eine Einrastkontur auf. Am Arretier-Absatz ist beispielsweise an einer in Drehrichtung führenden Kante eine Einrastkontur ausgebildet, die mit einer Komplementärkontur des Arretier-Vorsprungs des Gehäuses einen Formschluss bilden kann. Der Formschluss dient zur zusätzlichen Sicherung der Verbindung zwischen dem Drehstift und dem Gehäuse in der gesperrten Stellung. Das ist insbesondere dann vorteilhaft, wenn das Gehäuse gegenüber dem Deckel beispielsweise mit einer Radialdichtung aus einem nachgiebigen Material abgedichtet ist. Beim Verschließen des Gehäuses mit dem Deckel wird die Radialdichtung zusammengepresst, wodurch das Gehäuse entgegen der Einsetzrichtung auf den Drehstift drückt.

Gemäß einer bevorzugten Ausführungsform ist die Sicherungseinrichtung im ersten Kreissektor des Drehstiftes angeordnet und umfasst eine Auszieh-Vertiefung des Drehstiftes, in welche das rückfedernde Element eingreift, wobei das rückfedernde Element am Drehstiftträger angeordnet ist. Die Auszieh-Vertiefung ist umfänglich am Drehstift in radialer Richtung ausgebildet. Sie bildet im ersten Kreissektor des Drehstiftes eine radiale Einschnürung aus, die sich teilkreisförmig erstreckt. Die Auszieh-Vertiefung erstreckt sich über einen Sektorwinkel der zwischen 0° und 180° liegt. Insbesondere kann sich die Auszieh-Vertiefung über 180° erstrecken, d.h. sie erstreckt sich über den gesamten ersten Kreissektor.

Das rückfedernde Element ist am Drehstiftträger angeordnet. Es erstreckt sich in axialer Richtung der Einsetzöffnung und ist teilkreisförmig in Umfangsrichtung der Einsetzöffnung ausgebildet. Das rückfedernde Element kann beispielsweise als ein Rasthaken ausgebildet sein. Das Einführen des Drehstiftes in die Einsetzöffnung bis zur Einsetzposition bewirkt ein Aufdehnen des rückfedernden Elementes, um eine Federvorspannung des rückfedernden Elementes zu überwinden. In der Einsetzposition greift das rückfedernde Element in die Auszieh-Vertiefung des Drehstiftes ein. Dadurch kann das rückfedernde Element einen Kraftschluss mit dem Drehstift bilden. Das rückfedernde Element bildet einen axialen Formschluss mit einem Auszieh-Absatz, der in Richtung Einführende des Drehstiftes ausgebildet ist und der die Auszieh-Vertiefung begrenzt. Das rückfedernde Element verhindert ein grundsätzliches Herausfallen des Drehstiftes aus dem Drehstiftträger und sichert den Drehstift gegen geringe entgegen der Einsetzrichtung wirkende Axialkräfte.

Bevorzugt weist die Auszieh-Vertiefung des Drehstiftes eine umfängliche Erstreckung auf, die größer ist als die Erstreckung des rückfedernden Elementes in Umfangsrichtung der Einsetzöffnung. Die Auszieh-Vertiefung des Drehstiftes und das rückfedernde Element des Drehstiftträgers sind derart aufeinander abgestimmt, dass die Drehbewegung des Drehstiftes zwischen der offenen Stellung und der gesperrten Stellung möglich ist. So kann die umfängliche Erstreckung der Auszieh-Vertiefung beispielsweise 90° größer sein als die umfängliche Erstreckung des rückfedernden Elementes, für den Fall, dass der Drehstift zwischen der offenen Stellung und der gesperrten Stellung beispielsweise um 90° drehbar ist.

Gemäß einer bevorzugten Ausführungsform ist die Sperr-Vorrichtung durch eine Sperr-Vertiefung am Drehstift gebildet, wobei die Sperr-Vertiefung in Richtung Einführende des Drehstiftes einen Sperr-Absatz ausbildet, der in der gesperrten Stellung des Drehstiftes einen am Drehstiftträger angeordneten Sperr-Vorsprung hintergreift, der in die Einsetzöffnung hineinragt. Die Sperr-Vorrichtung weist eine am Drehstift ausgebildete Sperr-Vertiefung auf, die sich in Umfangsrichtung des Drehstiftes teilkreisförmig erstreckt. Die Sperr-Vertiefung ist ein Rücksprung, der eine Aufnahme des am Drehstiftträger angeordneten Sperr-Vorsprungs ermöglicht.

Die Sperr-Vertiefung erstreckt sich teilkreisförmig in Umfangsrichtung des Drehstiftes. In Richtung Einführende des Drehstiftes ist sie durch einen teilkreisförmigen Sperr-Absatz begrenzt. Durch Drehen des Drehstiftes von der offenen Stellung in die gesperrte Stellung kann der Drehstift über den Sperr-Absatz den Sperr-Vorsprung des Drehstiftträgers hintergreifen, wodurch eine insbesondere teilkreisförmige Konturüberschneidung zwischen dem Drehstift und dem Drehstiftträger gebildet wird. Die Konturüberschneidung kann beispielsweise jeweils komplementär zueinander ausgebildete Profile des Drehstiftes und des Drehstiftträger aufweisen. Es bildet sich in der gesperrten Stellung des Drehstiftes ein axialer Formschluss zwischen dem Drehstift und dem Drehstiftträger. Der axiale Formschluss kann in Ausziehrichtung wirkende Axialkräfte aufnehmen, um den Drehstift verlustsicher in der gesperrten Stellung im Drehstiftträger zu halten. Durch den Sperr-Absatz ist der Drehstift ohne zusätzliche Sicherungselemente, z.B. ein Splint oder Stift, gegen axiales Verschieben und/oder Verlust in dem Drehstiftträger gesichert. Dadurch kann der Drehstift in vorteilhafter Weise einteilig ausgebildet sein.

Der Sperr-Absatz kann insbesondere eine führende Kante mit wenigstens einer Abschrägung oder Fase aufweisen, die beim Drehen des Drehstiftes in die gesperrte Stellung ein Ineinandergreifen oder Einfädeln des Drehstiftes mit dem in die Einsetzöffnung vorstehenden Sperr-Vorsprung des Drehstiftträgers erleichtert.

Die teilkreisförmige Ausbildung des Sperr-Absatzes ermöglicht, dass der Drehstift in einer begrenzten Winkellage, insbesondere in der offenen Stellung, in die Einsetzrichtöffnung einführbar ist. In der offenen Stellung des Drehstiftes ist der Sperr-Absatz an dem in die Einsetzöffnung hineinragenden Sperr-Vorsprung des Drehstiftträgers in Einsetzrichtung ohne Überlagerung vorbeiführbar, so dass der Drehstift in die Einsetzposition einsetzbar ist.

Bevorzugt ist die Sperr-Vertiefung im zweiten Kreissektor des Drehstiftes ausgebildet. Sie erstreckt sich in Umfangsrichtung des Drehstiftes, wobei sie in radialer Richtung durch eine Wand des Drehstiftes begrenzt ist. Im Querschnitt des Drehstiftes betrachtet trennt die Wand den ersten Kreissektor vom zweiten Kreissektor. Dadurch sind die Sperr-Vertiefung bzw. der Sperr-Absatz und die Arretier-Vertiefung bzw. der Arretier-Absatz auf gegenüberliegenden Seiten der Wand angeordnet, wobei der Sperr-Absatz und der Arretier-Absatz jeweils eine führende Kante aufweisen, die in die gleiche Richtung ausgebildet sind. Die Wand ist im ersten Kreissektor des Drehstiftes vom Durchmesser des Drehstiftes definiert und weist eine Wandstärke auf, die sich im zweiten Kreissektor des Drehstiftes erstreckt. Dadurch ist die Wand relativ zum Durchmesser des Drehstiftes außermittig ausgebildet.

Vorzugsweise ist der Sperr-Vorsprung am Drehstiftträger im Querschnitt keilförmig ausgebildet und dient als Drehwinkelbegrenzung für den Drehstift. Er kann insbesondere zwei Schenkel aufweisen, die gleich lang sind, und einen 90° Winkel definieren. Bei einer Drehbewegung des Drehstiftes in die offene Stellung schlägt der Drehstift an einen Schenkel des keilförmigen Sperr-Vorsprungs an und beim Drehen in die gesperrte Stellung schlägt der Drehstift an den jeweils anderen Schenkel an. Das bedeutet, dass der Keil über die jeweiligen Schenkel, die beispielsweise einen 90° Winkel definieren, eine Drehwinkelbeschränkung für den Drehstift bildet. Der Drehstift ist zwischen der offenen Stellung und der gesperrten Stellung insbesondere um 90° drehbar.

Das keilförmige Element erstreckt sich in axialer Richtung der Einsetzöffnung, wobei die axiale Erstreckung geringer ist als die axiale Erstreckung der Sperr-Vertiefung des Drehstiftes, in die der Keil in der gesperrten Stellung des Drehstiftes eingreift. Dadurch ist ein einfaches Verriegeln und leichtes Verspannen durch Drehen des Drehstiftes in die gesperrte Stellung möglich.

In Umfangsrichtung der Einsetzöffnung erstreckt sich der Sperr-Vorsprung teilkreisförmig. Dadurch ist der Drehstift in einer begrenzten Winkellage, nämlich in der offenen Stellung, in die Einsetzöffnung einführbar. Der die Sperr-Vertiefung begrenzende teilkreisförmige Sperr-Absatz des Drehstiftes ist in der offenen Stellung ohne Überschneidung bzw. Überlagerung des keilförmigen Sperr-Vorsprungs ausgerichtet. So ist der Sperr-Absatz des Drehstiftes an dem Sperr-Vorsprung des Drehstiftträgers vorbeiführbar, um den Drehstift in der Einsetzöffnung in die Einsetzposition einzusetzen. In der gesperrten Stellung ist ein Einführen des Drehstiftes in die Einsetzöffnung aufgrund der Konturüberschneidung des Sperr-Vorsprungs und des Sperr-Absatzes verhindert.

Gemäß einer bevorzugten Ausführungsform weist die Sperr-Vertiefung eine Struktur auf, die mit einer korrespondierenden Struktur des Sperr-Vorsprungs derart zusammenpasst, dass der Drehstift im Drehstiftträger in der gesperrten Stellung vorübergehend verrastet.

Die Sperr-Vertiefung kann beispielsweise eine Struktur aufweisen, die als eine radiale Erhebung ausgebildet ist und eine Erstreckung in axialer Richtung des Drehstiftes aufweist. Durch Drehen des Drehstiftes in die gesperrte Stellung überwindet die Erhebung des Drehstiftes die Struktur des Sperr-Vorsprungs und bewirkt, dass der Drehstift in der gesperrten Stellung arretiert ist. Die Arretierung des Drehstiftes in der gesperrten Stellung ist durch Drehen des Drehstiftes in die offene Stellung überwindbar.

Bevorzugt ist der Drehstift zwischen dem Kopfende und dem Einführende mit wenigstens einer Dicht-Vertiefung ausgebildet ist. Zwischen dem Kopfende und dem Einführende kann der Drehstift wenigstens eine Dicht-Vertiefung, d.h. eine radiale Ausnehmung für ein Dichtelement, aufweisen, das zur radialen Abdichtung des Drehstiftes gegenüber dem Drehstiftträger dient.

Ferner betrifft die Erfindung ein Gehäuse mit einer Öffnung, die durch einen erfindungsgemäßen Deckel, wie er oben beschrieben ist, verschlossen ist. Das Gehäuse kann insbesondere als ein Gehäuse eines elektrischen Antriebs eines Ventils ausgebildet sein.

Vorzugsweise ist das Gehäuse mit einer Radialdichtung gegenüber dem Deckel abgedichtet. Die Radialdichtung dient zur Abdichtung des Gehäuses. Sie ist beispielsweise aus einem nachgiebigen Material gebildet und wird beim Verschließen des Gehäuses mit dem Deckel mindestens gering zusammengepresst.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet.

In der Zeichnung bedeutet:
- Fig. 1: eine Teilansicht eines axialen Längsschnittes eines erfindungsgemäßen Deckels mit einem Verschluss;
- Fig. 2: ein axialer Längsschnitt eines erfindungsgemäßen Deckels, der formschlüssig mit einem Gehäuse verbunden ist;
- Fig. 3: ein axialer Längsschnitt eines an einem Gehäuse angeordneten erfindungsgemäßen Deckels bei verhindertem Formschluss zwischen dem Deckel und dem Gehäuse;
- Fig. 4: seitliche Draufsichten auf einen Drehstift eines erfindungsgemäßen Deckels;
- Fig. 5: eine seitliche Draufsicht auf eine Einsetzöffnung eines erfindungsgemäßen Deckels; und
- Fig. 6: ein Querschnitt eines Verschlusses eines erfindungsgemäßen Deckels nach Fig. 2.

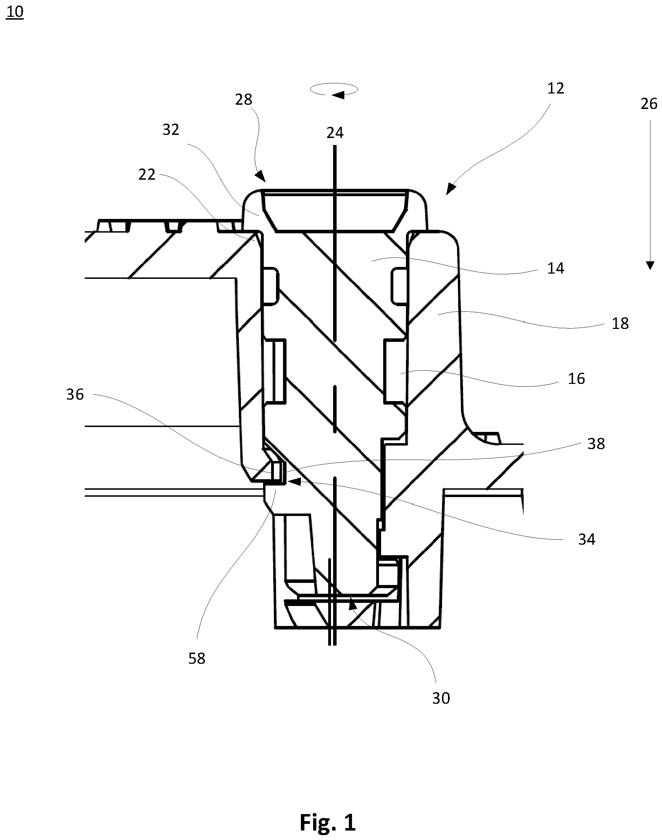

Fig. 1 bis Fig. 6 zeigen einen insgesamt mit der Bezugsziffer 10 bezeichneten Deckel mit einem Verschluss.

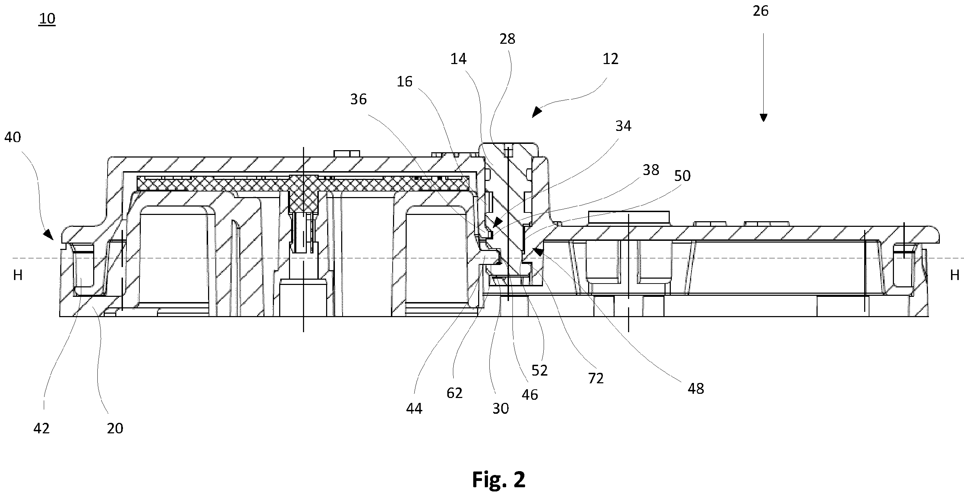

In Fig. 1 ist ein axialer Längsschnitt eines erfindungsgemäßen Deckels 10 mit einem Verschluss 12 dargestellt, umfassend einen Drehstift 14, der in eine Einsetzöffnung 16 eines Drehstiftträgers 18 eingesetzt ist. Der Drehstift 14 kann beispielsweise aus einem einteiligen Kunststoffformteil gebildet und insbesondere als ein Spritzgussformteil hergestellt sein. Er dient zur Verbindung des Deckels 10 mit einem hier nicht dargestellten weiteren Bauteil 20, das vorliegend insbesondere als ein Gehäuse 20 eines elektrischen Antriebs eines Stellventils ausgebildet ist. Der Drehstiftträger 18 kann beispielsweise als ein abnehmbares Teil 18 ausgebildet sein, das zur Verdeckung einer Öffnung des Gehäuses 20 dient, wie er in Fig. 2 dargestellt ist.

In Fig. 1 ist zu erkennen, dass die Einsetzöffnung 16 als eine im Wesentlichen zylindrische Ausnehmung des Drehstiftträgers 18 ausgebildet ist, die vorliegend eine Einführschräge 22 zur Einführung des im Wesentlichen ebenfalls zylinderförmig ausgebildeten Drehstiftes 14 aufweist. Die Einsetzöffnung 16 weist einen Innendurchmesser auf, der geringfügig größer als ein Außendurchmesser des Drehstiftes 14 ist. Dadurch weist der Drehstift 14 gegenüber dem Drehstiftträger 18 ein geringes Spiel und gute Beweglichkeit auf.

Der Drehstift 14 ist um eine Drehachse 24 drehbar in der Einsetzöffnung 16 gelagert. Vorliegend ist der Drehstift 14 in einer offenen Stellung dargestellt. In der offenen Stellung ist der Drehstift 14 in einer Einsetzrichtung 26 bis zu einer Einsetzposition, in welcher der Drehstift 14 gegen ein Herausfallen aus dem Drehstiftträger 18 gesichert ist, in die Einsetzöffnung 16 einführbar. Durch Drehen des Drehstiftes 14 um die Drehachse 24 ist der Drehstift 14 von der offenen Stellung in eine gesperrte Stellung versetzbar, welche in Fig. 2 dargestellt ist.

Aus der Fig. 1 geht hervor, dass der Drehstift 14 ein Kopfende 28 sowie ein gegenüberliegendes Einführende 30 aufweist. Der Drehstift 14 ist über das Einführende 30 bis zur Einsetzposition, die nachfolgend beschrieben wird, in die Einsetzöffnung 16 eingesetzt. Das Kopfende 28 des Drehstiftes 14 weist einen gegenüber dem Innendurchmesser der Einsetzöffnung 16 vergrößerten Kopf 32 auf, der in der Einsetzposition axial am Drehstiftträger 18 anliegt.

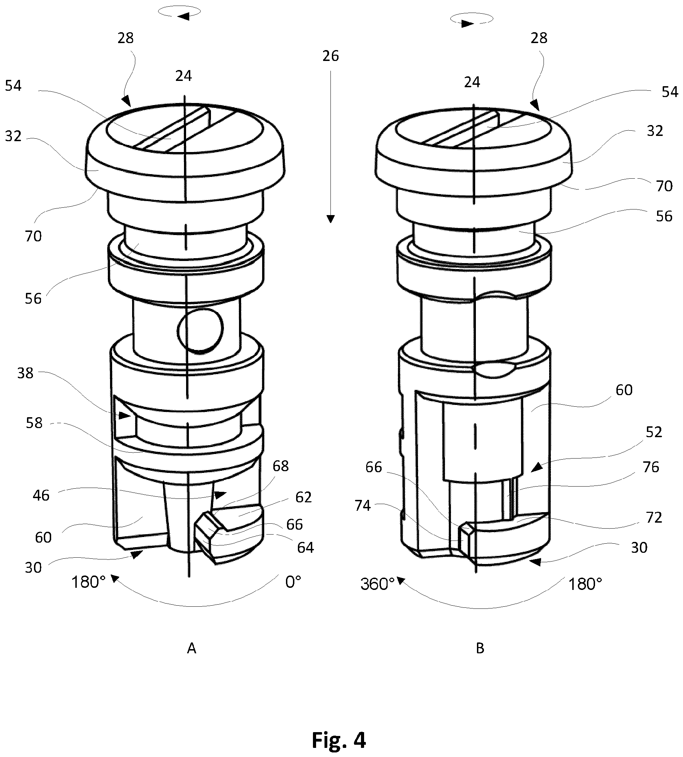

In der Einsetzposition verhindert eine Sicherungseinrichtung 34 das grundlegende Herausfallen des Drehstiftes 14 aus dem Drehstiftträger 18. Dazu weist die Sicherungseinrichtung 34 ein am Drehstiftträger 18 angeordnetes rückfederndes Element 36 auf, das in eine Auszieh-Vertiefung 38 des Drehstiftes 14 eingreift. Vorliegend ist das rückfedernde Element 36 als ein Rasthaken 36 ausgebildet, dessen Federvorspannung beim Einführen des Drehstiftes 14 in die Einsetzöffnung 16 überwunden wird, indem ein in Richtung Einführende 30 des Drehstiftes 14 ausgebildeter Auszieh-Absatz 58, vgl. Darstellung A in Fig. 4, den Rasthaken 36 auslenkt. Sobald der Drehstift 14 die Einsetzposition erreicht, kann der Rasthaken 36 in die Ausziehvertiefung 38 eingreifen und einen axialen Formschluss mit dem Auszieh-Absatz 58 bilden. Über den Formschluss wirkt die Sicherungseinrichtung 34 gegen geringe Axialkräfte, die entgegen der Einsetzrichtung 26 wirken. In der offenen Stellung ist der Drehstift 14 in der Einsetzrichtung 26 in die Einsetzöffnung 16 einführbar und entgegen der Einsetzrichtung 26, d.h. in Ausziehrichtung, durch Überwinden des axialen Formschlusses der Sicherungseinrichtung 34 aus der Einsetzöffnung 16 herausnehmbar.

Fig. 2 stellt den erfindungsgemäßen Deckel 10 in Verbindung mit einem Gehäuse 20 dar. Vorliegend ist der Deckel 10 axial formschlüssig in das Gehäuse 20 eingesetzt und über den Drehstift 14 mit dem Gehäuse 20 verriegelt. Ein Deckelanschlag 40 begrenzt den Deckel 10 axial beim Aufsetzen auf das Gehäuse 20. Zwischen dem Gehäuse 20 und dem Deckel 10 ist vorliegend eine Radialdichtung 42 zur Abdichtung des Gehäuses 20 gegenüber dem Deckel 10 angeordnet.

Der in der Einsetzöffnung 16 gelagerte Drehstift 14 ist vorliegend in der gesperrten Stellung dargestellt, die eine Verriegelung des Deckels 10 mit dem Gehäuse 20 ermöglicht. In der gesperrten Stellung des Drehstiftes 14 greift ein in die Einsetzöffnung 16 hineinragender Arretier-Vorsprung 44 des Gehäuses 20 in eine Arretier-Vertiefung 46 des Drehstiftes 14 ein. Die Arretier-Vertiefung ist in Richtung Einführende 30 des Drehstiftes 14 durch einen Arretier-Absatz 62 begrenzt, siehe auch Darstellung A in Fig. 4. Der Arretier-Absatz 62 hintergreift vorliegend den Arretier-Vorsprung 44 des Gehäuses 20. Auf diese Weise ist in der gesperrten Stellung des Drehstiftes 14 ein axialer Formschluss zwischen dem Drehstift 14 und dem Gehäuse 20 gebildet, über den eine Lagesicherung des Deckels 10 am Gehäuse 20 gewährleistet ist. Der axiale Formschluss des Arretier-Absatzes 62 des Drehstiftes 14 mit dem Arretier-Vorsprung 44 des Gehäuses 20 kann gegenüber der Sicherungseinrichtung 34, die in Fig.1 beschrieben ist, größere Axialkräfte aufnehmen und verhindert, dass der Arretier-Vorsprung 44 des Gehäuses 20 den Drehstift 14 durch entgegen der Einsetzrichtung 26 wirkende Kräfte aus dem Drehstiftträger 18 herausdrückt, wenn der Deckel 10 auf das Gehäuse 20 gedrückt wird.

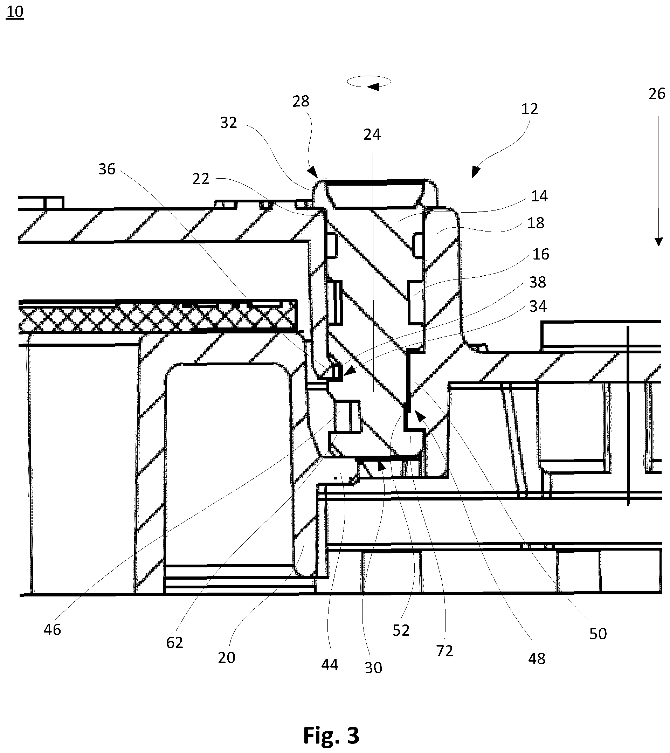

Erfindungsgemäß bilden der Drehstift 14 und der Drehstiftträger 18 in der gesperrten Stellung mittels einer Sperr-Vorrichtung 48, vgl. Fig. 3, einen wirksamen Formschluss, der eine axiale Bewegung des Drehstiftes 14 entgegen der Einsetzrichtung 26 verhindert und der durch Drehen des Drehstiftes 14 in die offene Stellung freigegeben ist. Vorliegend umfasst die Sperr-Vorrichtung 48 eine am Drehstift 14 ausgebildete Sperr-Vertiefung 52, die in Richtung Einführende 30 durch einen Sperr-Absatz 72, vgl. Darstellung B in Fig. 4, begrenzt ist.

Durch Drehen des Drehstiftes 14 in die gesperrte Stellung hintergreift der Sperr-Absatz 72 einen am Drehstiftträger 18 angeordneten Sperr-Vorsprung 50 und es bildet sich ein axialer Formschluss, der den Drehstift 14 im Drehstiftträger 18 gegen Verlust sichert. Der Sperr-Absatz 72 des Drehstiftes 14 ermöglicht, dass der Drehstift 14 ohne zusätzliche Sicherungselemente, beispielsweise ein Splint usw., im Drehstiftträger 18 gegen Verlust gesichert ist. Dadurch kann der Drehstift 14 in vorteilhafter Weise einteilig ausgebildet sein.

In Fig. 2 ist der Drehstift 14 in der gesperrten Stellung im Drehstiftträger 18 gesichert, und der Drehstift 14 sichert den Deckel 10 am Gehäuse 20. Wie in Fig. 3 dargestellt ist, besteht jedoch die Möglichkeit, dass der Drehstift 14 sich in der gesperrten Stellung befindet, bevor der Deckel 10 formschlüssig am Gehäuse 20 angeordnet ist.

Wenn der Drehstift 14, wie in Fig. 3 dargestellt ist, beim Aufsetzen des Deckels 10 auf das Gehäuse 20 in der gesperrten Stellung ist, drückt der Arretier-Vorsprung 44 des Gehäuses 20 gegen den Arretier-Absatz 62 des Drehstiftes 14. Die entgegen der Einsetzrichtung 26 auf den Drehstift 14 wirkenden Axialkräfte können die relativ geringe Haltekraft der Sicherungseinrichtung 34 überwinden. Die erfindungsgemäße Sperr-Vorrichtung 48, die durch den zusätzlichen axialen Formschluss zwischen dem Drehstift 14 und dem Drehstiftträger 18 in der gesperrten Stellung wirksam ist, verhindert in vorteilhafter Weise den Verlust des Drehstiftes 14 in der vorbeschriebenen Situation. Die Sperr-Vorrichtung 48 kann im Vergleich zur Sicherungseinrichtung 34 größere Axialkräfte entgegen der Einsetzrichtung 26 aufnehmen und sichert den Drehstift 14 in der gesperrten Stellung im Drehstiftträger 18 gegen Verlust.

Aus Fig. 4 ist gut zu erkennen, dass der Drehstift 14 im Querschnitt durch einen ersten Kreissektor A, der sich umfangseitig von 0° bis 180° erstreckt, sowie einen zweiten Kreissektor B, der sich umfangseitig von 180° bis 360° erstreckt, definiert ist. In Fig. 4 ist der Drehstift 14 in einer seitlichen Draufsicht auf den ersten Kreissektor A sowie in einer seitlichen Draufsicht auf den zweiten Kreissektor B dargestellt. Die jeweiligen Darstellungen sind 180° um die Drehachse 24 des Drehstiftes 14 zueinander gedreht.

Der Drehstift 14 weist vorliegend im Wesentlichen eine zylindrische Form auf. Am Kopfende 28 weist der Drehstift 14 einen durchmesservergrößerten Kopf 32 auf, der an seiner Unterseite mit einer Ringfläche 70 ausgebildet ist. Wenn der Drehstift 14 in der Einsetzposition in die Einsetzöffnung 16 eingesetzt ist, liegt die Ringfläche 70 des Drehstiftes 14 flächig an einer Ringfläche der Einsetzöffnung 16 des Drehstiftträgers 18 an, wie in der Fig. 1 dargestellt ist.

Aus der Fig. 4 geht hervor, dass der Kopf 32 des Drehstiftes eine Eingriffsausnehmung 54 ausbildet, die zur Aufnahme eines Drehwerkzeuges dient, insbesondere eines Schraubenziehers, mit dem der Drehstift 14 in der Einsetzposition zwischen einer offenen Stellung und einer gesperrten Stellung um die Drehachse 24 drehbar ist.

Das dem Kopfende 28 gegenüberliegend angeordnete Einführende 30 ist in Einsetzrichtung 26 in die hier nicht dargestellte Einsetzöffnung 16 einführbar.

Zwischen dem Kopfende 28 und dem Einführende 30 weist der Drehstift 14 vorliegend eine radiale Dicht-Vertiefung 56 für ein hier nicht dargestelltes Dichtelement auf, das zur radialen Abdichtung des Drehstiftes 14 gegenüber dem Drehstiftträger 18 dient.

In einer Draufsicht auf den ersten Kreissektor A des Drehstiftes 14 ist die teilkreisförmige radiale Auszieh-Vertiefung 38 des Drehstiftes 14 gut zu erkennen. Die Auszieh-Vertiefung 38 ist in Umfangsrichtung des Drehstiftes 14 als eine Einschnürung 38 im ersten Kreissektor A ausgebildet.

Vorliegend erstreckt sie sich umfänglich über einen Bereich von 0° bis 180°. Die Auszieh-Vertiefung 38 ist in Richtung Einführende 30 des Drehstiftes 14 durch einen Auszieh-Absatz 58 begrenzt.

Beim Einführen des Drehstiftes 14 in die Einsetzöffnung 16 erfolgt über den Auszieh-Absatz 58 ein Überwinden der Federvorspannung des hier nicht dargestellten rückfedernden Rasthakens 36. In der Einsetzposition des Drehstiftes 14 greift der Rasthaken 36 in die Auszieh-Vertiefung 38 ein und bildet einen axialen Formschluss mit dem Auszieh-Absatz 58, wodurch die Sicherheitseinrichtung 34 gebildet ist, wie in Fig. 1 dargestellt ist. Über den Formschluss des Rasthakens 36 mit dem Auszieh-Absatz 58 ist der Drehstift 14 in der offenen Stellung gegen ein grundsätzliches Herausfallen aus der Einsetzöffnung 16 und gegen geringe entgegen der Einsetzrichtung 26 wirkende Axialkräfte gesichert.

Vorliegend ist im ersten Kreissektor A des Drehstiftes 14 die Arretier-Vertiefung 46 axial zwischen der Auszieh-Vertiefung 38 und dem Einführende 30 ausgebildet. Die Arretier-Vertiefung 46 erstreckt sich in Umfangsrichtung des Drehstiftes 14 zwischen 0° und 180°, wobei sie radial durch eine Wand 60 des Drehstiftes 14 begrenzt ist, die den ersten Kreissektor A vom zweiten Kreissektor B trennt.

Die Arretier-Vertiefung 46 ist in Richtung Einführende 30 des Drehstiftes 14 durch den teilkreisförmigen Arretier-Absatz 62 begrenzt. Dieser ermöglicht ein Hintergreifen des hier nicht dargestellten Arretier-Vorsprungs 44 des Gehäuses 20 durch den Drehstift 14. Der Arretier-Absatz 62 weist beim Drehen des Drehstiftes 14 in die gesperrte Stellung eine führende Kante 64 auf, die vorliegend Abschrägungen 66 bzw. Fasen 66 aufweist, wodurch ein Ineinandergreifen des Drehstiftes 14 mit dem Arretier-Vorsprung 44 des Gehäuses 20 erleichtert ist.

Ferner ist der Arretier-Absatz 62 vorliegend mit einer Einrastkontur 68 ausgebildet, die in der gesperrten Stellung einen Formschluss mit einer Komplementärform des Arretier-Vorsprungs 44 des Gehäuses 20 bilden kann. Das dient zur zusätzlichen Sicherung der Verbindung zwischen dem Drehstift 14 und dem Gehäuse 20 in der gesperrten Stellung.

Aus der seitlichen Draufsicht auf den zweiten Kreissektor B des Drehstiftes 14 ist die Sperr-Vertiefung 52 der erfindungsgemäßen Sperr-Vorrichtung 48 gut zu erkennen. Die Sperr-Vertiefung 52 bildet zusammen mit dem hier nicht dargestellten komplementären Profil des Drehstiftträgers 18 bzw. dem in die Einsetzöffnung 16 vorstehenden Sperr-Vorsprung 50 die erfindungsgemäße Sperr-Vorrichtung 48 aus. Die Sperr-Vertiefung 52 erstreckt sich in Umfangsrichtung des Drehstiftes teilkreisförmig und ist in Richtung Einführende 30 des Drehstiftes 14 durch einen teilkreisförmigen Sperr-Absatz 72 begrenzt.

Der Sperr-Absatz 72 weist ein Kante 74 auf, die vorliegend mit Abschrägungen 66 oder Fasen 66 ausgebildet ist, welche beim Drehen des Drehstiftes 14 in die gesperrte Stellung ein Ineinandergreifen oder Einfädeln des Drehstiftes 14 mit dem vorliegend nicht dargestellten Sperr-Vorsprung 50 des Drehstiftträgers 18 erleichtern.

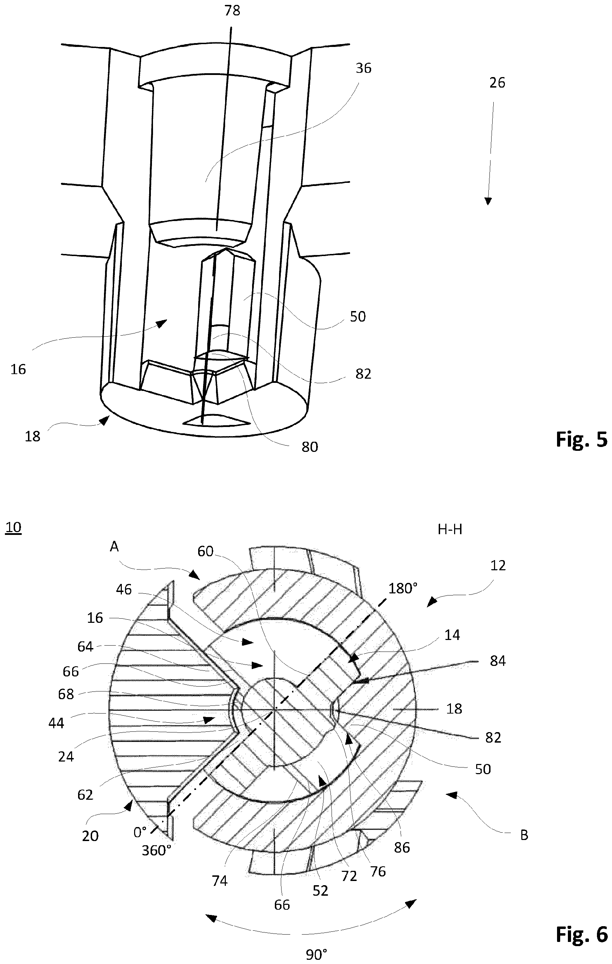

Vorliegend weist die Sperr-Vertiefung 52 eine Struktur 76 auf, die als eine radiale Erhebung 76 ausgebildet ist. Die Erhebung 76 erstreckt sich in axialer Richtung des Drehstiftes 14. Durch das Drehen des Drehstiftes 14 in die gesperrte Stellung überwindet die Erhebung 76 den in die Einsetzöffnung 16 hineinragenden Sperr-Vorsprung 50 des Drehstiftträgers 18. Dadurch ist der Drehstift 14 in der gesperrten Stellung arretiert, wie in einer Querschnittansicht des Verschlusses 12 in Fig. 6 dargestellt ist. Die Struktur 76 der Sperr-Vertiefung 52 hält den Drehstift 14 vorübergehend in der gesperrten Stellung im Drehstiftträger 18. Durch Drehen des Drehstiftes 14 in die offene Stellung kann die Erhebung 76 durch den Sperr-Vorsprung überwunden werden.

In Fig. 5 ist eine seitliche Draufsicht der im Wesentlichen als eine zylindrische Ausnehmung des Drehstiftträgers 18 ausgebildeten Einsetzöffnung 16 dargestellt. Der hier nicht dargestellte Drehstift 14 ist in der Einsetzrichtung 26 in die Einsetzöffnung 16 einführbar und entgegen der Einsetzrichtung 26 bzw. in Ausziehrichtung durch Überwinden der Sicherheitseinrichtung 34 herausnehmbar.

Am Drehstiftträger 18 ist das rückfedernde Element 36 der Sicherungseinrichtung 34 angeordnet. Es ist vorliegend als ein Rasthaken 36 ausgebildet, der sich in axialer Richtung 78 der Einsetzöffnung 16 erstreckt und in Umfangsrichtung der Einsetzöffnung 16 teilkreisförmig ausgebildet ist. Vorliegend erstreckt sich der Rasthaken 36 über etwa 90°. Der Rasthaken 36 dient dazu, in die Auszieh-Vertiefung 38 des hier nicht dargestellten Drehstiftes 14 einzugreifen. Dadurch bildet der Rasthaken 36 einen Formschluss mit dem Auszieh-Absatz 58 des Drehstiftes 14. Durch das Eingreifen des Rasthakens 36 in den Drehstift 14 ist ein grundlegendes Herausfallen des Drehstiftes 14 aus dem Drehstiftträger 18 verhindert und der Drehstift 14 ist im Drehstiftträger 18 auch gegen geringe Axialkräfte, die entgegen der Einsetzrichtung 26 wirken, gesichert.

In etwa gegenüberliegend vom Rasthaken 36 ist der radial in die Einsetzöffnung 16 hineinragende Sperr-Vorsprung 50 des Drehstiftträgers 18 angeordnet. Der Sperr-Vorsprung 50 erstreckt sich in axialer Richtung 78, wobei die axiale Erstreckung geringer ist als die axiale Erstreckung der Sperr-Vertiefung 52 des Drehstiftes 14. Dadurch kann der Sperr-Absatz 72 des Drehstiftes 14 den Sperr-Vorsprung 50 des Drehstiftträgers 18 in der gesperrten Stellung hintergreifen. Durch Drehen der Drehstiftes 14 in die gesperrte Stellung schwenkt der Sperr-Absatz 72 des Drehstiftes 14 über eine Stirnseite 80 des Sperr-Vorsprungs 50. Dadurch ist ein axialer Formschluss zwischen dem Drehstift 14 und dem Drehstiftträger 18 in der gesperrten Stellung gebildet.

Ferner weist der Sperr-Vorsprung 50 eine Struktur 82 auf, die als eine Einrastung 82 ausgebildet ist. Die Einrastung 82 ist korrespondierend zur Erhebung 76 der Sperr-Vertiefung des Drehstiftes 14 ausgebildet. In der gesperrten Stellung des Drehstiftes 14 verrasten die Einrastung 82 des Sperr-Vorsprungs 50 und die Erhebung 76 miteinander, wodurch der Drehstift 14 im Drehstiftträger 18 arretiert ist, wie in Fig. 6 beschrieben ist.

In Fig. 6 ist ein radialer Querschnitt H-H des Deckels 10 im Bereich des Verschlusses 12 nach Fig. 2 dargestellt. Der erfindungsgemäße Deckel 10 ist vorliegend in Verbindung mit dem Gehäuse 20 dargestellt und umfasst den Drehstift 14, der vorliegend in der Einsetzöffnung 16 des Drehstiftträgers 18 in der gesperrten Stellung gezeigt ist. Der Drehstift 14 ist um die Drehachse 24 drehbar zwischen der offenen Stellung und der gesperrten Stellung in der Einsetzöffnung 16 des Drehstiftträgers 18 gelagert.

Aus der Querschnittdarstellung ist gut zu erkennen, dass der Drehstift 14 einen ersten Kreissektor A von 0° bis 180° und einen zweiten Kreissektor B von 180° bis 360° definiert.

Im ersten Kreissektor A bildet der Drehstift 14 die Arretier-Vertiefung 46 aus. Sie erstreckt sich in Umfangsrichtung des Drehstiftes 14 teilkreisförmig und beansprucht vorliegend 180°. Die Arretier-Vertiefung 46 ist radial durch eine Wand 60 des Drehstiftes 14 begrenzt. Die Arretier-Vertiefung 46 ist in einem Bereich zwischen 0° und 90° durch den Arretier-Absatz 62 begrenzt. In der gesperrten Stellung des Drehstiftes 14 hintergreift der Arretier-Absatz 62 den Arretier-Vorsprung 44 des Gehäuses 20, wodurch eine teilkreisförmige Konturüberschneidung mit axialem Formschluss zwischen dem Drehstift 14 und dem Arretier-Vorsprung 44 des Gehäuse 20 entsteht. Durch den axialen Formschluss ist eine Lagesicherung des Deckels 10 am Gehäuse 20 gewährleistet.

Um das Ineinandergreifen zwischen dem Drehstift 14 und dem Arretier-Vorsprung 44 zu erleichtern, weist die in Drehrichtung führende Kante 64 des Arretier-Absatzes 62 eine Abschrägung 66 bzw. Fase 66 auf. Der Arretier-Absatz 62 weist vorliegend auch eine Einrastkontur 68 auf, die einen Formschluss mit einer Komplementärform des Arretier-Vorsprungs 44 des Gehäuses 20 bildet. Der Formschluss dient als eine zusätzliche Sicherung der Verbindung zwischen dem Drehstift 14 und dem Arretier-Vorsprung 44 des Gehäuses 20.

Der Arretier-Absatz 62 ist vorliegend zwischen 0° und 90° des ersten Kreissektors A des Drehstiftes 14 ausgebildet. Dadurch überlagern sich der Arretier-Absatz 62 und der Arretier-Vorsprung 44 des Gehäuses 20 nur in einer begrenzten Winkellage, insbesondere in der gesperrten Stellung des Drehstiftes 14. In der offenen Stellung ist der Drehstift 14 ohne eine Überlagerung des Arretier-Absatzes 62 mit dem Arretier-Vorsprung 44 des Gehäuses 20 in die Einsetzöffnung 16 bis in die Einsetzposition einführbar, d.h. in der offenen Stellung ist der Arretier-Absatz 62 des Drehstiftes 14 am Arretier-Vorsprung 44 des Gehäuses vorbeiführbar.

Erfindungsgemäß bildet der Drehstift 14 in der gesperrten Stellung über die Sperr-Vorrichtung 48 mit dem Drehstiftträger 18 einen axialen Formschluss. Dazu hintergreift der Sperr-Absatz 72 des Drehstiftes 14 den in die Einsetzöffnung 16 hineinragenden Sperr-Vorsprung 50 des Drehstiftträgers 18.

Die Sperr-Vorrichtung 48 weist im zweiten Kreissektor B des Drehstiftes 14 die Sperr-Vertiefung 52 auf, die sich in Umfangsrichtung des Drehstiftes 14 erstreckt und radial von der Wand 60 des Drehstiftes 14 begrenzt ist. Die Wand 60 trennt die Sperr-Vertiefung 52 von der im ersten Kreissektor A gegenüberliegend angeordneten Arretier-Vertiefung 46. Die Wand 60 definiert den Durchmesser des Drehstiftes 14, wobei sie mit einer sich im zweiten Kreissektor B des Drehstiftes 14 radial erstreckenden Wandstärke exzentrisch ausgebildet ist. Dadurch beträgt die umfängliche Erstreckung der Sperr-Vertiefung 52 weniger als 180°.

Die Sperr-Vertiefung 52 ist in Richtung Einführende 30 des Drehstiftes 14 durch den Sperr-Absatz 72 begrenzt. Der Sperr-Absatz 72 erstreckt sich teilkreisförmig in Umfangsrichtung des Drehstiftes 14 im zweiten Kreissektor B und ist an seiner in Drehrichtung führenden Kante 74 mit einer Abschrägung 66 ausgebildet, die das Ineinandergreifen des Drehstiftes 14 mit dem Drehstiftträger 18 beim Drehen des Drehstiftes 14 in die gesperrte Stellung erleichtert.

Die Sperr-Vertiefung 52 weist eine Struktur 76 auf, die vorliegend als eine radiale Erhebung 76 ausgebildet ist. Durch das Drehen des Drehstiftes 14 in die gesperrte Stellung überwindet die Erhebung 76 den in die Einsetzöffnung 16 hineinragenden Sperr-Vorsprung 50 des Drehstiftträgers 18 und rastet in eine am Sperr-Vorsprung ausgebildete korrespondiere Struktur 82 ein, wodurch der Drehstift 14 in der gesperrten Stellung arretiert ist, bis er in die offene Stellung gedreht wird.

Wie aus der Fig. 6 hervorgeht, ist der Sperr-Vorsprung 50 des Drehstiftträgers 18 in Umfangsrichtung der Einsetzöffnung 16 teilkreisförmig ausgebildet und ragt keilförmig in die Einsetzöffnung 16 hinein. Der Sperr-Vorsprung 50 weist zwei Schenkel 84, 86 auf, die vorliegend einen 90° Winkel definieren. In der vorliegend gesperrten Stellung des Drehstiftes 14 liegt der Drehstift 14 an einem ersten Schenkel 84 des Keils an. Durch Drehen des Drehstiftes 14 in die offene Stellung schlägt der Drehstift 14 an den jeweils anderen Schenkel 86 des Keils an. Die Schenkel 84, 86 dienen als Drehwinkelbegrenzung für den Drehstift 14. Vorliegend definieren die Schenkel 84, 86 einen 90°-Winkel, wodurch der Drehstift 14 zwischen der offenen Stellung und der gesperrten Stellung insbesondere um 90° drehbar ist.

In Umfangsrichtung der Einsetzöffnung 16 erstreckt sich der keilförmige Sperr-Vorsprung 50 teilkreisförmig und der Sperr-Absatz 72 des Drehstiftes 14 erstreckt sich teilkreisförmig in Umfangsrichtung des Drehstiftes 14. Dadurch ist der Sperr-Absatz 72 in einer begrenzten Winkellage, nämlich in der offenen Stellung, ohne Überschneidung zum Sperr-Vorsprung 50 ausgerichtet. In der offenen Stellung des Drehstiftes 14 ist der Sperr-Absatz 72 an dem vorstehenden Sperr-Vorsprung 50 vorbeiführbar, so dass der Drehstift 14 in der offenen Stellung in die Einsetzöffnung 16 bis zur Einsetzposition einsetzbar ist. In der gesperrten Stellung des Drehstiftes 14 ist das Einführen des Drehstiftes 14 in die Einsetzöffnung 16 durch die sich jeweils überschneidende Ausrichtung des Sperr-Vorsprungs 50 und des Sperr-Absatzes 72 verhindert.

### Bezugszeichenliste

- 10: Deckel
- 12: Verschluss
- 14: Drehstift
- 16: Einsetzöffnung
- 18: Drehstiftträger
- 20: Gehäuse
- 22: Einführschräge
- 24: Drehachse
- 26: Einsetzrichtung
- 28: Kopfende
- 30: Einführende
- 32: Kopf
- 34: Sicherungseinrichtung
- 36: rückfederndes Element
- 38: Auszieh-Vertiefung
- 40: Deckelanschlag
- 42: Radialdichtung
- 44: Arretier-Vorsprung
- 46: Arretier-Vertiefung
- 48: Sperr-Vorrichtung
- 50: Sperr-Vorsprung
- 52: Sperr-Vertiefung
- 54: Eingriffsausnehmung
- 56: Dicht-Vertiefung
- 58: Auszieh-Absatz
- 60: Wand
- 62: Arretier-Absatz
- 64: führende Kante
- 66: Abschrägung
- 68: Einrastkontur
- 70: Ringfläche
- 72: Sperr-Absatz
- 74: vorlaufende Kante
- 76: Struktur
- 78: axiale Richtung
- 80: Stirnseite
- 82: korrespondierende Struktur
- 84: erster Schenkel
- 86: zweiter Schenkel

- A: erster Kreissektor
- B: zweiter Kreissektor

## Patentansprüche

1. Deckel (10) zur Verbindung mit einem Gehäuse (20), umfassend einen Verschluss (12), der einen Drehstift (14) aufweist, wobei der Drehstift (14) in einer Einsetzrichtung (26) in eine Einsetzöffnung (16) eines Drehstiftträgers (18) des Deckels (10) bis zu einer Einsetzposition einbringbar ist
wobei der Drehstift (14) in der Einsetzposition mittels eines rückfedernden Elements (36) einer Sicherungseinrichtung (34) im Drehstiftträger (18) entgegen der Einsetzrichtung (26) gesichert ist, wobei der Drehstift (14) um eine Drehachse (24) drehbar zwischen einer offenen Stellung und einer gesperrten Stellung im Drehstiftträger (18) gelagert ist, und wobei der Drehstift (14) durch Drehen von der offenen Stellung in die gesperrte Stellung bringbar ist, **dadurch gekennzeichnet, dass** der Drehstift (14) und der Drehstiftträger (18) in der gesperrten Stellung mittels einer Sperr-Vorrichtung (48) einen wirksamen Formschluss bilden, der eine axiale Bewegung des Drehstiftes (14) entgegen der Einsetzrichtung (26) verhindert und wobei der axiale Formschluss in der offenen Stellung freigegeben ist.

2. Deckel nach Anspruch 1, **dadurch gekennzeichnet, dass** die Einsetzöffnung (16) des Drehstiftträgers (18) als eine im Wesentlichen zylindrische Ausnehmung mit einem Innendurchmesser ausgebildet ist und der Drehstift (14) im Wesentlichen zylinderförmig mit einem Außendurchmesser ausgebildet ist, wobei der Innendurchmesser und Außendurchmesser nahezu gleich sind.

3. Deckel nach Anspruch 1 oder 2, **dadurch gekennzeichnet, dass** der Drehstift (14) ein Kopfende (28) sowie ein Einführende (30) aufweist, wobei das Kopfende (28) mit einem gegenüber der Einsetzöffnung (16) vergrößerten Kopf (32) ausgebildet ist und wobei das Einführende (30) in eine Einsetzrichtung (26) in die Einsetzöffnung (16) einführbar ist.

4. Deckel nach Anspruch 3, **dadurch gekennzeichnet, dass** der Drehstift (14) im Querschnitt einen ersten Kreissektor (A) von 0° bis 180° sowie einen zweiten Kreissektor (B) von 180° bis 360° definiert, wobei der Drehstift (14) im ersten Kreissektor (A)° eine Arretier-Vertiefung (46) aufweist, die sich in Umfangsrichtung des Drehstiftes (14) erstreckt, und wobei die Arretier-Vertiefung (46) in Richtung Einführende (30) des Drehstiftes (14) durch einen Arretier-Absatz (62) begrenzt ist, der in der gesperrten Stellung ein Hintergreifen eines Arretier-Vorsprungs (44) des Gehäuses (20) durch den Drehstift (14) ermöglicht.

5. Deckel nach Anspruch 4, **dadurch gekennzeichnet, dass** der Arretier-Absatz (62) eine Einrastkontur (68) aufweist.

6. Deckel nach Anspruch 4 oder 5, **dadurch gekennzeichnet, dass** die Sicherungseinrichtung (34) im ersten Kreissektor (A) des Drehstiftes (14) angeordnet ist und eine Auszieh-Vertiefung (38) des Drehstiftes (14) umfasst, in welche das rückfedernde Element (36) eingreift, wobei das rückfedernde Element (36) am Drehstiftträger (18) angeordnet ist.

7. Deckel nach Anspruch 6, **dadurch gekennzeichnet, dass** die Auszieh-Vertiefung (38) des Drehstiftes (14) eine umfängliche Erstreckung aufweist, die größer ist als die Erstreckung des rückfedernden Elementes (36) in Umfangsrichtung der Einsetzöffnung (16).

8. Deckel nach einem der Ansprüche 3 bis 7, **dadurch gekennzeichnet, dass** die Sperr-Vorrichtung (48) durch eine Sperr-Vertiefung (52) am Drehstift (14) gebildet ist, wobei die Sperr-Vertiefung (52) in Richtung Einführende (30) des Drehstiftes (14) durch einen Sperr-Absatz begrenzt ist, der in der gesperrten Stellung des Drehstiftes (14) einen am Drehstiftträger (18) angeordneten Sperr-Vorsprung (50) hintergreift, wobei der Sperr-Vorsprung (50) in die Einsetzöffnung (16) hineinragt.

9. Deckel nach Anspruch 8, **dadurch gekennzeichnet, dass** die Sperr-Vertiefung (52) im zweiten Kreissektor (B) des Drehstiftes (14) ausgebildet ist.

10. Deckel nach Anspruch 8 bis 9, **dadurch gekennzeichnet, dass** der Sperr-Vorsprung (50) keilförmig ausgebildet ist und als Drehwinkelbegrenzung für den Drehstift (14) dient.

11. Deckel nach einem der Ansprüche 8 bis 10, **dadurch gekennzeichnet, dass** die Sperr-Vertiefung (52) eine Struktur (76) aufweist, die mit einer korrespondierenden Struktur (82) des Sperr-Vorsprungs (50) derart zusammenpasst, dass der Drehstift (14) im Drehstiftträger (18) in der gesperrten Stellung vorübergehend verrastet.

12. Deckel nach einem der vorangehenden Ansprüche 3 bis 11, **dadurch gekennzeichnet, dass** der Drehstift (14) zwischen dem Kopfende (28) und dem Einführende (30) mit wenigstens einer Dicht-Vertiefung (56) ausgebildet ist.

13. Gehäuse (20), das eine Öffnung aufweist, die durch einen Deckel (10) verschlossen ist, **dadurch gekennzeichnet, dass** der Deckel (10) nach einem der Ansprüche 1 bis 12 ausgebildet ist.

14. Gehäuse nach Anspruch 13, **dadurch gekennzeichnet, dass** das Gehäuse (20) mit einer Radialdichtung (42) gegenüber dem Deckel (10) abgedichtet ist.

## Claims

1. Lid (10) for connection to a housing (20), comprising a closure (12) having a pivot pin (14), which pivot pin (14) is adapted to be inserted into an insertion opening (16) of a pivot pin carrier (18) in an insertion direction (26) until it has assumed an insertion position thereof, with said pivot pin (14) being secured in its insertion position against the insertion direction (26) by means of a resilient element (36) of a securing device (34) provided in the pivot pin carrier (18), which pivot pin (14) is mounted in the pivot pin carrier (18) in a manner that allows it to rotate about an axis of rotation (24) between an open position and a locked position thereof, and which pivot pin (14) can be moved from its open position into its locked position by rotating it, **characterized in that** said pivot pin (14) and said pivot pin carrier (18) form an effective positive locking in the locked position by means of a locking device (48), which prevents axial movement of the pivot pin (14) against the insertion direction (26), and which axial positive locking is released in the open position.

2. Lid according to claim 1, **characterized in that** said insertion opening (16) of said pivot pin carrier (18) is formed as a substantially cylindrical recess having an inner diameter, and that said pivot pin (14) is substantially cylindrical in shape and has an outer diameter, with said inner diameter and said outer diameter being substantially the same.

3. Lid according to claim 1 or 2, **characterized in that** said pivot pin (14) has a head end (28) and an insertion end (30), which head end (28) is provided with a head (32) that is larger than the insertion opening (16), and which insertion end (30) is adapted to be inserted into said insertion opening (16) in an insertion direction (26).

4. Lid according to claim 3, **characterized in that** in cross-section, said pivot pin (14) defines a first circular sector (A) of between 0° and 180° and a second circular sector (B) of between 180° and 360°, which pivot pin (14) has a locking recess (46) in the first circular sector (A), which extends in the circumferential direction of the pivot pin (14), and towards the insertion end (30) of said pivot pin (14), said locking recess (46) is delimited by a locking shoulder (62) which, in its locked position, allows said pivot pin (14) to engage behind a locking projection (44) of the housing (20).

5. Lid according to claim 4, **characterized in that** said locking shoulder (62) has a snap-in contour (68).

6. Lid according to claim 4 or 5, **characterized in that** said securing device (34) is arranged in the first circular sector (A) of said pivot pin (14) and comprises a pull-out recess (38) of said pivot pin (14) in which said resilient element (36) engages, with said resilient element (36) being arranged on said pivot pin carrier (18).

7. Lid according to claim 6, **characterized in that** said pull-out recess (38) of said pivot pin (14) has a circumferential extent that is greater than the extent of said resilient member (36) in the circumferential direction of said insertion opening (16).

8. Lid according to any one of claims 3 to 7, **characterized in that** said locking device (48) is formed by a locking recess (52) on the pivot pin (14), which locking recess (52) is delimited towards the insertion end (30) of said pivot pin (14) by a locking shoulder which, in the locked position of said pivot pin (14), engages behind a locking projection (50) arranged on said pivot pin carrier (18), with said locking projection (50) projecting into said insertion opening (16).

9. Lid according to claim 8, **characterized in that** said locking recess (52) is formed in the second circular sector (B) of said pivot pin (14).

10. Lid according to claim 8 to 9, **characterized in that** said locking projection (50) is wedge-shaped and serves as a rotation angle limiter for said pivot pin (14).

11. Lid according to any one of claims 8 to 10, **characterized in that** said locking recess (52) has a structure (76) that mates with a corresponding structure (82) of said locking protrusion (50) so as to cause said pivot pin (14) to temporarily snap in place in said pivot pin carrier (18) in the locked position.

12. Lid according to any one of the preceding claims 3 to 11, **characterized in that** said pivot pin (14) has at least one sealing recess (56) formed therein between said head end (28) and said insertion end (30).

13. Housing (20) having an opening closed by a lid (10), **characterized in that** said lid (10) is of a design as specified in any one of claims 1 to 12.

14. Housing (20) according to claim 13, **characterized in that** a radial seal (42) is used to seal said housing (20) against said lid (10).

## Revendications

1. Couvercle (10) destiné à l'assemblage avec un boîtier (20), comprenant une fermeture (12), qui présente une broche rotative (14), dans lequel la broche rotative (14) peut être introduite dans une ouverture d'insertion (16) d'un support de broche rotative (18) du couvercle (10) dans un sens d'insertion (26) jusqu'à une position d'insertion,
dans lequel la broche rotative (14) est bloquée dans la position d'insertion au moyen d'un élément élastique (36) d'un système de sécurité (34) dans le support de broche rotative (18) à l'opposé du sens d'insertion (26), dans lequel la broche rotative (14) est supportée rotative autour d'un axe de rotation (24) entre une position ouverte et une position verrouillée dans le support de broche rotative (18), et dans lequel la broche rotative (14) peut être amenée en la position verrouillée par rotation depuis la position ouverte, **caractérisé en ce que** la broche rotative (14) et le support de broche rotative (18) constituent un engagement à complémentarité de forme efficace dans la position verrouillée au moyen d'un dispositif de verrouillage (48) qui empêche un mouvement axial de la broche rotative (14) à l'opposé du sens d'insertion (26) et dans lequel l'engagement à complémentarité de forme axial est libéré dans la position ouverte.

2. Couvercle selon la revendication 1, **caractérisé en ce que** l'ouverture d'insertion (16) du support de broche rotative (18) est conçue sous la forme d'une cavité sensiblement cylindrique ayant un diamètre interne et la broche rotative (14) est conçue sous une forme sensiblement cylindrique ayant un diamètre externe, dans lequel le diamètre interne et le diamètre externe sont presque identiques.

3. Couvercle selon la revendication 1 ou 2, **caractérisé en ce que** la broche rotative (14) présente une extrémité de tête (28) ainsi qu'une extrémité d'introduction (30), dans lequel l'extrémité de tête (28) est conçue avec une tête (32) agrandie par rapport à l'ouverture d'insertion (16) et dans lequel l'extrémité d'introduction (30) peut être introduite dans un sens d'insertion (26) dans l'ouverture d'insertion (16).

4. Couvercle selon la revendication 3, **caractérisé en ce que** la broche rotative (14) définit en coupe transversale un premier secteur circulaire (A) allant de 0° à 180° ainsi qu'un deuxième secteur circulaire (B) allant de 180° à 360°, dans lequel la broche rotative (14) présente dans le premier secteur circulaire (A)° un renfoncement de blocage (46) qui s'étend dans le sens de la circonférence de la broche rotative (14) et dans lequel le renfoncement de blocage (46) est délimité dans le sens de l'extrémité d'introduction (30) de la broche rotative (14) par un talon de blocage (62) qui permet une mise en prise par l'arrière d'une saillie de blocage (44) du boîtier (20) par la broche rotative (14) dans la position verrouillée.

5. Couvercle selon la revendication 4, **caractérisé en ce que** le talon de blocage (62) présente un contour d'encliquetage (68).

6. Couvercle selon la revendication 4 ou 5, **caractérisé en ce que** le système de sécurité (34) est disposé dans le premier secteur circulaire (A) de la broche rotative (14) et comprend un renfoncement d'extraction (38) de la broche rotative (14) dans lequel vient en prise l'élément élastique (36), l'élément élastique (36) étant disposé sur le support de broche rotative (18).

7. Couvercle selon la revendication 6, **caractérisé en ce que** le renfoncement d'extraction (38) de la broche rotative (14) présente une extension circonférentielle qui est supérieure à l'extension de l'élément élastique (36) dans le sens de la circonférence de l'ouverture d'insertion (16).

8. Couvercle selon l'une des revendications 3 à 7, **caractérisé en ce que** le dispositif de verrouillage (48) est formé par un renfoncement de verrouillage (52) sur la broche rotative (14), dans lequel le renfoncement de verrouillage (52) est délimité dans le sens de l'extrémité d'introduction (30) de la broche rotative (14) par un talon de verrouillage, qui met en prise par l'arrière une saillie de verrouillage (50) disposée sur le support de la broche rotative (18) dans la position verrouillée de la broche rotative (14), dans lequel la saillie de verrouillage (50) est saillante dans l'ouverture d'insertion (16).

9. Couvercle selon la revendication 8, **caractérisé en ce que** le renfoncement de verrouillage (52) est formé dans le deuxième secteur circulaire (B) de la broche rotative (14).

10. Couvercle selon la revendication 8 à 9, **caractérisé en ce que** la saillie de verrouillage (50) est conçue en forme de coin et sert de délimitation d'angle de rotation pour la broche rotative (14).

11. Couvercle selon l'une des revendications 8 à 10, **caractérisé en ce que** le renfoncement de verrouillage (52) présente une structure (76) qui s'adapte à une structure correspondante (82) de la saillie de verrouillage (50) de telle sorte que la broche rotative (14) est encliquetée transitoirement dans le support de broche rotative (18) dans la position verrouillée.

12. Couvercle selon l'une des revendications précédentes 3 à 11, **caractérisé en ce que** la broche rotative (14) est conçue avec au moins un renfoncement de joint (56) entre l'extrémité de tête (28) et l'extrémité d'introduction (30).

13. Boîtier (20) qui présente une ouverture qui est fermée par un couvercle (10), **caractérisé en ce que** le couvercle (10) est conçu selon l'une des revendications 1 à 12.

14. Boîtier selon la revendication 13, **caractérisé en ce que** le boîtier (20) est rendu étanche vis-à-vis du couvercle (10) par un joint radial (42).
